# FASCICULE DE BREVET EUROPEEN

(11) **EP 3 575 629 B1**
(45) Date de publication et mention de la délivrance du brevet: **05.08.2020**
(21) Numéro de dépôt: 19175295.5
(22) Date de dépôt: 20.05.2019
(51) Int. Cl.: F16F 13/06

(54) **AMORTISSEUR HYDROELASTIQUE, ET AERONEF**
HYDROELASTISCHER STOSSDÄMPFER UND LUFTFAHRZEUG
HYDRO-ELASTIC SHOCK ABSORBER, AND AIRCRAFT

(30) Priorité: 31.05.2018 FR 1800539
(43) Date de publication de la demande: 04.12.2019
(73) Titulaire: Airbus Helicopters, 13725 Marignane Cedex (FR)
(72) Inventeur: BIHEL, Jean-Romain, 13740 LE ROVE (FR); SEQUERA, Damien, 41089 DOS HERMANAS (ES); JALAGUIER, Jean-Pierre, 13127 VITROLLES (FR)
(74) Mandataire: GPI & Associés

(56) Documents cités:
- EP-A1- 2 678 222
- EP-A1- 3 130 537
- EP-A2- 2 015 988
- EP-B1- 1 000 274

## Description

La présente invention a pour objet un amortisseur hydroélastique, et un aéronef comprenant au moins un amortisseur hydroélastique de ce type.

L'invention se rapporte au domaine technique général de l'amortissement des mouvements d'un système mécanique et plus particulièrement des équipements comportant des systèmes d'amortissement utilisés dans l'aéronautique.

L'invention trouve son application tout particulièrement dans des amortisseurs de traînée utilisés sur un rotor de sustentation de giravion, et notamment d'un hélicoptère. L'invention se situe dès lors dans le domaine technique restreint des amortisseurs de traînée aérodynamique.

Sur un rotor d'hélicoptère, un dispositif d'amortissement peut relier chaque pale ou moyen de fixation de pale au moyeu du rotor ou peut relier deux pales ou moyens de fixation de pales adjacentes entre eux. Un tel dispositif d'amortissement est notamment connu sous l'expression « amortisseur de traînée » ou parfois « adaptateur de fréquences à amortissement incorporé ».

Un dispositif d'amortissement connu peut présenter des organes de rappel élastiques ayant un matériau en élastomère.

Le document FR 2950027 présente un dispositif comprenant plusieurs blocs d'élastomère.

Le document CN 102501970 décrit aussi un système muni d'une pluralité de blocs d'élastomère.

Un autre type de dispositif d'amortissement dit « mixte » peut être utilisé. Un dispositif d'amortissement mixte prend la forme d'un amortisseur hydroélastique qui est muni d'un organe élastique et d'un système hydraulique montés en parallèle.

Selon la réalisation, le fluide hydraulique peut être en contact avec un matériau en élastomère de l'organe élastique. Dès lors, ce fluide hydraulique peut tendre à dégrader l'élastomère.

Le document FR 2736890 décrit un dispositif d'amortissement de ce type.

Le document EP 1000274 présente un amortisseur hyroélastique et est considéré comme l'état de la technique le plus proche.

Le document US 2013/0164131 décrit aussi un amortisseur hydroélastique. Un premier anneau ayant un matériau en élastomère s'étend radialement entre une armature intermédiaire et une armature centrale, et un deuxième anneau ayant un matériau en élastomère s'étend radialement entre une armature intermédiaire et une armature externe.

Le document EP 2678222 décrit un amortisseur hydroélastique muni d'un premier organe de liaison solidaire d'un système hydraulique. Un deuxième organe de liaison est solidaire d'une armature, un organe élastique étant interposé entre l'armature et le système hydraulique. L'organe de liaison et le système hydraulique fonctionnent en série suite à un déplacement du premier organe de liaison par rapport au deuxième organe de liaison, à savoir l'un après l'autre.

Les documents WO 2012/148389, WO 2013/152300, EP 3130537, EP 2015988 sont aussi connus.

La présente invention a alors pour objet de proposer un amortisseur hydroélastique muni d'un organe élastique et d'un système hydraulique innovant afin d'optimiser sa durée de vie.

Selon l'invention, un amortisseur hydroélastique comprend au moins un ensemble élastique, ledit au moins un ensemble élastique incluant un premier ensemble élastique, ledit premier ensemble élastique comprenant une première armature interne au moins partiellement engagée dans une première armature externe, la première armature interne et la première armature externe étant mobiles l'une par rapport à l'autre au moins en translation selon un axe longitudinal. Le premier ensemble élastique comprend un premier organe élastique solidarisé à la première armature externe et à la première armature interne en assurant un rappel élastique de la première armature externe et de la première armature interne vers une position de repos. L'amortisseur hydroélastique comprend au moins un ensemble hydraulique muni d'une première chambre hydraulique et d'une deuxième chambre hydraulique en communication l'une avec l'autre via au moins une liaison ménagée dans une première paroi de l'ensemble hydraulique, un fluide étant disposé au moins dans ladite première chambre hydraulique et ladite deuxième chambre hydraulique.

Cet amortisseur hydroélastique comporte un premier piston flottant mobile au moins en translation le long de l'axe longitudinal par rapport à la première armature interne et à la première armature externe, ladite première chambre hydraulique ayant un volume variable et étant délimitée au moins par ledit premier piston flottant et ladite première paroi, ledit premier piston flottant isolant hydrauliquement ledit premier organe élastique du fluide. Bien que le premier piston soit monté flottant par rapport à la première armature interne et à la première armature externe, le premier piston peut se déplacer conjointement avec une de ces armatures, au moins dans certaines configurations.

L'expression « une première armature interne au moins partiellement engagée dans une première armature externe » signifie que l'armature interne s'étend au moins dans un espace délimité par l'armature externe. Par exemple, l'armature interne et l'armature externe sont coaxiales.

L'amortisseur hydroélastique comporte donc un premier piston monté flottant dans le premier ensemble élastique, à savoir un premier piston mobile par rapport aux organes de ce premier ensemble élastique. Ce premier piston flottant est agencé entre le premier organe élastique et le fluide hydraulique, et en particulier entre le premier organe élastique et la première chambre hydraulique. Ce premier piston flottant représente ainsi une barrière empêchant le fluide hydraulique d'entrer en contact avec le premier organe élastique. Ce premier organe élastique peut alors comporter un matériau du groupe des élastomères ayant une durée de vie optimisée.

En effet, un contact entre de l'huile et un élastomère par exemple est susceptible d'être néfaste pour l'élastomère en fonction de la pression de l'huile, de la température de l'huile, voire de la composition chimique de l'huile. Le premier piston flottant peut alors permettre de protéger le premier organe élastique en isolant le fluide hydraulique du premier organe élastique.

L'agencement d'un piston flottant dans le but d'optimiser une durée de vie n'est pas évident dans la mesure où un tel piston mobile est lui-même sujet à une usure en fatigue. Néanmoins, le premier piston étant monté flottant, ce premier piston ne subit que peu d'efforts radiaux. Ces efforts radiaux subis sont uniquement dus à la force centrifuge exercée sur le premier piston flottant. La durée de vie du piston flottant et des organes associés et le cas échéant d'un joint est alors optimisée. Pour maximiser cette durée de vie, le piston flottant peut être réalisé avec un matériau léger afin de minimiser les efforts radiaux subis et exercés par exemple sur un joint dynamique. Un tel matériau léger peut par exemple comprendre un alliage d'aluminium, un matériau du groupe des plastiques...

Par ailleurs, le premier piston flottant peut tendre à éviter un phénomène de cavitation dans la première chambre hydraulique suite à une extension rapide de l'amortisseur. Le montage flottant du premier piston flottant tend en effet à éviter la présence de vide dans la première chambre hydraulique.

L'amortisseur hydroélastique peut de plus comporter une ou plusieurs des caractéristiques qui suivent.

Selon un aspect, le premier piston flottant peut coulisser le long de la première armature externe ou de la première armature interne, un premier joint étant agencé entre ledit premier piston flottant et ladite première armature externe ou première armature interne le long de laquelle coulisse le premier piston flottant.

Un ou plusieurs premiers joints peuvent être agencés. Un tel premier joint est un joint dynamique qui tend à éviter le passage du fluide vers le premier ensemble élastique.

Le premier joint peut être agencé dans une gorge du premier piston flottant ou de la première armature externe ou de la première armature interne et peut saillir en dehors de cette gorge.

Selon un aspect, le premier piston flottant peut coulisser le long de la première armature externe ou de la première armature interne, au moins deux premières bagues de guidage étant agencées chacune entre le premier piston flottant et la première armature externe ou la première armature interne le long de laquelle coulisse le premier piston flottant.

Chaque bague de guidage peut s'étendre dans une gorge du premier piston flottant ou de la première armature externe ou de la première armature interne et peut saillir en dehors de cette gorge.

Le montage flottant du premier piston flottant permet de minimiser les efforts radiaux subis par le premier piston flottant et donc par le premier joint et/ou les premières bagues de guidage. Dès lors, la durée de vie du premier joint et/ou des premières bagues de guidage est optimisée.

Selon un aspect, le premier piston flottant n'est fixé ni au premier ensemble élastique ni à l'ensemble hydraulique.

Le premier piston flottant peut coulisser dans la première armature externe ou la première armature interne. Par exemple, le premier piston flottant est mobile en translation le long de l'axe longitudinal par rapport à la première armature interne et à la première armature externe, voire en rotation autour de cet axe longitudinal.

Selon un aspect, la première chambre hydraulique peut être délimitée partiellement par la première armature externe ou la première armature interne. La première chambre hydraulique peut être délimitée partiellement par l'armature le long de laquelle coulisse le premier piston flottant.

Selon un aspect, la première paroi peut être solidaire en translation le long de l'axe longitudinal de la première armature externe ou de la première armature interne. La première paroi peut être solidaire en translation le long de l'axe longitudinal de l'armature le long de laquelle coulisse le premier piston flottant.

L'amortisseur hydroélastique peut avoir une conception modulaire. Le premier ensemble élastique et l'ensemble hydraulique sont alors démontables de manière non destructive, la première chambre hydraulique étant ménagée entre eux. Cette conception modulaire peut permettre d'optimiser les coûts de maintenance et/ou des pièces de rechange.

Selon un aspect, la première armature interne ou la première armature externe peut exercer uniquement un appui ponctuel sur un premier point du premier piston lorsque le premier piston est en contact avec cette première armature interne ou première armature externe.

Par exemple, lorsque le premier piston flottant coulisse le long d'une armature, l'autre armature est susceptible d'exercer ledit appui ponctuel.

Par exemple, lorsque l'amortisseur hydroélastique est comprimé la première armature interne pousse le premier piston flottant au travers d'un appui ponctuel pour déplacer le fluide hydraulique de la première chambre hydraulique vers la deuxième chambre hydraulique. Un tel appui ponctuel vise à ne pas introduire d'efforts radiaux dans le premier piston flottant et le cas échéant dans le premier joint et les premières bagues de guidage.

Eventuellement, le premier point du premier piston est situé sur un axe de symétrie de révolution dudit premier piston flottant.

Selon un aspect, l'ensemble hydraulique peut comporter un carter qui inclut ladite première paroi, ladite deuxième chambre hydraulique étant délimitée par ledit carter et un piston d'expansion mobile en translation par rapport au carter.

Sur un rotor, le piston d'expansion peut être positionné pour se déplacer sensiblement selon la direction de la force centrifuge exercée sur ce piston d'expansion pour minimiser les efforts radiaux subis par ce piston d'expansion.

Selon un premier mode de réalisation, ledit ensemble hydraulique est solidaire d'une tête de liaison à rotule alignée avec une tête de liaison à rotule dudit premier ensemble élastique.

Selon ce premier mode de réalisation, l'amortisseur hydroélastique comporte uniquement le premier ensemble élastique et l'ensemble hydraulique.

Selon un deuxième mode de réalisation, l'amortisseur hydroélastique comporte deux ensembles élastiques du type décrit précédemment et un ensemble hydraulique.

Dès lors, ledit au moins un ensemble élastique comprend un deuxième ensemble élastique, ledit deuxième ensemble élastique comprenant une deuxième armature interne et une deuxième armature externe mobiles l'une par rapport à l'autre au moins en translation selon l'axe longitudinal, ledit deuxième ensemble élastique comprenant un deuxième organe élastique solidarisé à la deuxième armature externe et à la deuxième armature interne en assurant un rappel élastique de la deuxième armature externe et de la deuxième armature interne vers une position initiale, ledit amortisseur hydroélastique comprenant une troisième chambre hydraulique qui est éventuellement en communication fluidique avec la deuxième chambre hydraulique via au moins une voie ménagée dans une deuxième paroi de l'ensemble hydraulique et/ou en communication fluidique avec la première chambre hydraulique, ledit amortisseur hydroélastique comportant un deuxième piston flottant mobile au moins en translation le long de l'axe longitudinal par rapport à la deuxième armature interne et à la deuxième armature externe, ladite troisième chambre hydraulique ayant un volume variable et étant délimitée au moins par ledit deuxième piston flottant et ladite deuxième paroi, ledit deuxième piston flottant isolant hydrauliquement ledit deuxième organe élastique du fluide.

Eventuellement, le deuxième piston flottant peut coulisser le long de la deuxième armature externe ou de la deuxième armature interne, un joint étant agencé entre ledit deuxième piston flottant et ladite deuxième armature externe ou la deuxième armature interne le long de laquelle coulisse le deuxième piston flottant.

Eventuellement, le deuxième piston flottant pouvant coulisser le long de la deuxième armature externe ou de la deuxième armature interne, au moins deux bagues de guidage peuvent être agencées chacune entre le deuxième piston flottant et la deuxième armature externe ou la deuxième armature interne le long de laquelle coulisse le deuxième piston flottant.

Eventuellement, le deuxième piston flottant n'est fixé ni au deuxième ensemble élastique ni à l'ensemble hydraulique.

Eventuellement, la troisième chambre hydraulique est délimitée partiellement par la deuxième armature externe ou la deuxième armature interne.

Eventuellement, la deuxième paroi est solidaire en translation de la deuxième armature externe ou la deuxième armature interne.

Eventuellement, les premier et deuxième ensembles élastiques sont positionnés de part et d'autre de la deuxième chambre hydraulique, deux têtes de liaison à rotule respectivement des premier et deuxième ensembles élastiques étant alignées.

Eventuellement, la deuxième armature interne ou la deuxième armature externe exerce uniquement un appui ponctuel sur un deuxième point du deuxième piston lorsque le deuxième piston est en contact avec la deuxième armature interne ou avec la deuxième armature externe.

Eventuellement, le deuxième point du deuxième piston est situé sur un axe de symétrie de révolution dudit deuxième piston flottant.

Par ailleurs, un aéronef peut être muni d'un rotor participant au moins à la sustentation de cet aéronef, ledit rotor comprenant un moyeu portant une pluralité d'ensembles sustentateurs et au moins un amortisseur hydroélastique selon l'invention.

En particulier, le rotor peut comporter des amortisseurs hydroélastique interpales.

Dès lors, chaque ensemble sustentateur est agencé circonférentiellement entre deux autres ensembles sustentateurs et est relié à ces deux autres ensembles sustentateurs respectivement par deux amortisseurs hydroélastiques. Chaque amortisseur hydroélastique est alors articulé à une pale et à une pale adjacente.

L'invention et ses avantages apparaîtront avec plus de détails dans le cadre de la description qui suit avec des exemples donnés à titre illustratif en référence aux figures annexées qui représentent :
- les figures 1 à 3, des schémas présentant un amortisseur hydroélastique muni un ensemble élastique,
- la figure 4, un schéma montrant un amortisseur hydroélastique à deux ensembles élastiques,
- la figure 5, un diagramme montrant une loi « triple pente » appliquée par l'amortisseur hydroélastique des figures 1 à 4,
- les figures 6 à 7, des schémas explicitant le fonctionnement d'un amortisseur hydroélastique selon l'invention,
- la figure 8, un schéma montrant un rotor muni d'amortisseurs hydroélastiques selon l'invention, et
- la figure 9, un schéma montrant un aéronef muni d'amortisseurs hydroélastiques selon l'invention.

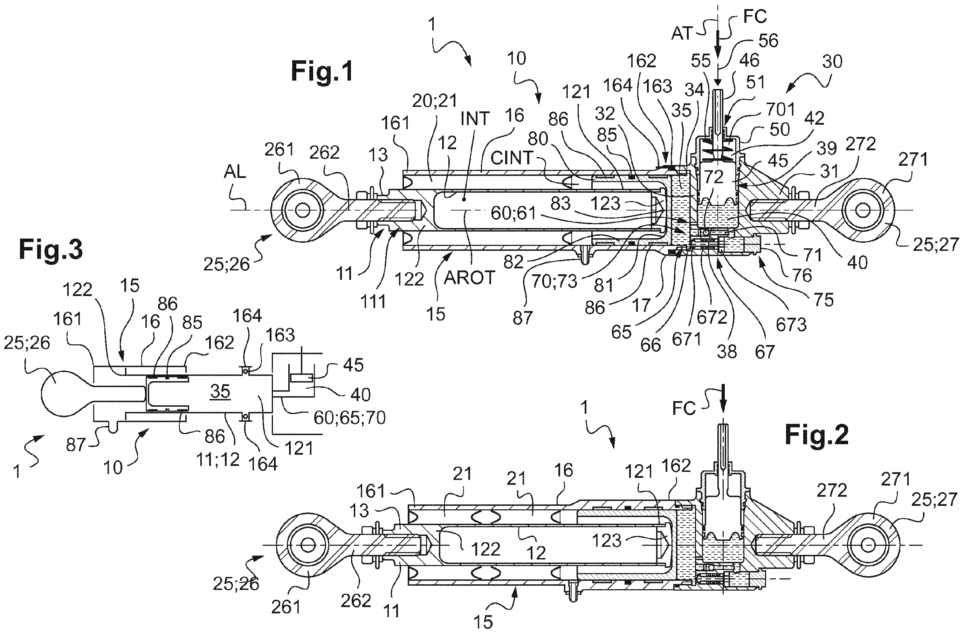

La figure 1 présente une réalisation d'un amortisseur hydroélastique 1 selon l'invention.

Indépendamment de la réalisation, l'amortisseur hydroélastique 1 inclut au moins un ensemble élastique. Chaque ensemble élastique comporte une armature interne, une armature externe, un organe de rappel élastique solidaire au moins en translation de l'armature interne et de l'armature externe voire une tête de liaison à fixer à un autre équipement.

Dès lors, l'amortisseur hydroélastique 1 inclut au moins un ensemble élastique dénommé « premier ensemble élastique 10 ».

Le premier ensemble élastique 10 comprend une première armature interne 11. Cette première armature interne 11 peut comprendre une unique pièce monobloc d'un seul tenant ou encore plusieurs pièces fixées les unes aux autres.

La première armature interne 11 peut comprendre un premier cylindre interne 12 qui est creux. Ce premier cylindre interne 12 peut avoir une base circulaire par exemple, ou d'autres formes telles que par exemple une forme polygonale. Le premier cylindre interne 12 peut s'étendre longitudinalement le long d'un axe longitudinal AL d'une extrémité dite « première extrémité interne 121 » jusqu'à une extrémité dite «première extrémité externe 122 ». L'axe longitudinal AL peut être un axe de symétrie du premier cylindre interne 12. Les efforts de compression et d'étirement exercés sur l'amortisseur hydroélastique sont éventuellement dirigés le long de cet axe longitudinal AL.

Le premier ensemble élastique 10 comprend en outre une première armature externe 15. Cette première armature externe 15 peut comprendre une unique pièce monobloc d'un seul tenant ou encore à plusieurs pièces fixées les unes aux autres.

La première armature externe 15 entoure au moins partiellement la première armature interne 11, et par exemple au moins une partie du cylindre interne 12.

Ainsi, la première armature externe 15 peut comprendre un premier cylindre externe 16 qui est creux. Le premier cylindre externe 16 peut entourer au moins partiellement le cylindre interne 12. Le premier cylindre externe 16 et le premier cylindre interne 12 peuvent être coaxiaux. Ce premier cylindre externe 16 peut avoir une base circulaire par exemple, ou d'autres formes de base. Le premier cylindre externe 16 peut s'étendre longitudinalement le long de l'axe longitudinal AL d'une portion d'extrémité dite « première zone extrémale externe 161 » jusqu'à une portion d'extrémité dite « première zone extrémale interne 162 ».

Par ailleurs, le premier ensemble élastique 10 comprend un premier organe élastique 20 reliant la première armature externe 15 à la première armature interne 11 en autorisant au moins un degré de liberté en translation selon l'axe longitudinal AL à la première armature externe 15 par rapport à la première armature interne 11. Le premier organe élastique 20 assure un rappel élastique de la première armature externe 15 et de la première armature interne 11 vers la position de repos POSREP de la figure 1.

Le premier organe élastique 20 s'étend radialement, à savoir perpendiculairement à l'axe longitudinal AL entre au moins une face du premier cylindre interne 12 et une face du premier cylindre externe 16 en regard l'une de l'autre.

Le premier organe élastique 20 peut comporter au moins un premier bloc 21 comprenant un matériau du groupe des élastomères, et notamment un bloc d'élastomère fixé ou solidarisé en translation au premier cylindre interne et au premier cylindre externe. L'organe élastique peut ainsi comprendre un ou plusieurs blocs d'élastomère annulaire 21 tels qu'illustrés sur la figure 2.

Le premier organe élastique 20 peut comprendre des sous-ensembles élastiques d'un autre type, par exemple des ressorts ou équivalents.

L'expression « premier organe élastique » désigne ainsi un sous-ensemble reliant la première armature interne à la première armature externe qui se déforme élastiquement en cas de déplacement en translation relatif entre la première armature interne 11 et la première armature externe 15.

Selon l'alternative de la figure 1, la première armature interne 11 peut comprendre une première extrémité de fixation 13 qui prolonge selon l'axe longitudinal AL le premier cylindre interne 12, en étant accolée à la première extrémité externe 122. Cette première extrémité de fixation 13 ferme le premier cylindre interne au niveau de sa première extrémité externe 122 alors que la première extrémité interne 121 est au contraire ouverte sur l'extérieur et éventuellement obturée par un bouchon 123. La première extrémité de fixation 13 peut être fixée au premier cylindre interne 12 par des moyens usuels de vissage, soudage, rivetage...ou la première extrémité de fixation 13 et le premier cylindre interne 12 peuvent représenter deux tronçons d'une même pièce unitaire. Indépendamment de cet aspect, La première armature interne 11 peut délimiter un espace interne INT obturé par le bouchon 123 pour minimiser sa masse.

Par ailleurs, une tête de liaison 25 dite « première tête de liaison 26 » peut être rendue solidaire de la première extrémité de fixation 13. Cette première tête de liaison 26 est solidaire au moins en translation selon l'axe longitudinal AL de la première armature interne 11. Cette première tête de liaison 26 peut être intégrée à la première armature interne 11 ou peut lui être fixée par des moyens usuels. Par exemple, la première tête de liaison 26 comporte une tête rotulée 261 solidaire d'un pied 262, la tête rotulée 261 pouvant être munie d'une articulation à rotule centrée sur l'axe longitudinal AL et/ou le pied 262 pouvant être vissé à la première extrémité de fixation 13.

En outre, la première zone extrémale externe 161 peut être ouverte. Selon l'exemple de la figure 1, la première zone extrémale externe 161 entoure la première armature interne alors que la première zone extrémale interne 162 dépasse longitudinalement de la première extrémité interne 121 de la première armature interne 11.

Selon l'alternative de la figure 3, la première extrémité de fixation 13 est rendue solidaire non pas de la première armature interne mais de la première armature externe 15. La première armature externe 15 comporte alors la première extrémité de fixation 13 qui prolonge selon l'axe longitudinal AL le premier cylindre externe 16, en étant accolée à la première zone extrémale externe 161.

Par ailleurs, l'amortisseur hydroélastique 1 comporte un ensemble hydraulique 30 dans lequel circule un fluide 41, tel que de l'huile par exemple mais non obligatoirement. L'ensemble hydraulique permet d'apporter de l'amortissement en cas notamment de compression de l'amortisseur hydroélastique 1.

Cet ensemble hydraulique 30 comporte un carter 31 fixé à chaque ensemble élastique, par exemple de manière réversible et non destructive par des moyens usuels. Ce carter 31 peut comprendre une unique pièce monobloc d'un seul tenant ou encore plusieurs pièces fixées les unes aux autres.

Selon la variante de la figure 1, le carter 31 est ainsi fixé à la première zone extrémale interne 162 de la première armature externe 15, éventuellement par des moyens usuels 164 et un joint statique 163. Le carter 31 est alors solidaire en translation le long de l'axe longitudinal AL de la première armature externe 15. Selon la variante de la figure 3, le carter 31 est fixé à la première extrémité interne de la première armature interne 11, éventuellement par des moyens usuels 164 et un joint statique 163. A titre d'exemple, ces moyens usuels 164 de fixation réversibles peuvent comprendre des vis.

Selon un autre aspect et en référence à la figure 1, le carter 31 peut comporter un cylindre de liaison 34 par ensemble élastique. Le cylindre de liaison 34 peut être en appui contre un épaulement 17 du cylindre externe d'une armature externe ou du cylindre interne d'une armature interne selon la variante. Un joint statique 163 peut être disposé entre le cylindre de liaison 34 et le cylindre de l'ensemble élastique fixé à ce cylindre de liaison.

En outre, l'ensemble hydraulique 30 inclut une chambre de compression à volume variable par ensemble élastique qui communique avec une chambre d'expansion ménagée dans le carter 31 par une paroi de l'ensemble hydraulique. Chaque chambre de compression peut être délimitée par l'ensemble élastique correspondant et le carter 31. Ainsi, l'ensemble hydraulique est muni au moins d'une chambre de compression dite « première chambre hydraulique 35 » délimitée par le premier ensemble élastique et le carter 31 et d'une chambre d'expansion dite « deuxième chambre hydraulique 40 ». Les diverses chambres sont remplies du fluide 41. La première chambre hydraulique 35 et la deuxième chambre hydraulique 40 sont en communication fluidique via au moins une liaison ménagée dans une première paroi 32 du carter 31.

Par exemple, la deuxième chambre hydraulique 40 est ménagée dans une cavité 39 de l'ensemble hydraulique. En particulier, la deuxième chambre hydraulique 40 est délimitée selon une direction transversale AT par un fond 38 de la cavité 39 et un piston d'expansion 45. Le piston d'expansion 45 sépare ainsi la deuxième chambre hydraulique 40 et une chambre de rappel 42 dans la cavité 39. Ce piston d'expansion 45 est mobile en translation dans la cavité 39 selon la direction transversale AT. La direction transversale AT peut être orthogonale ou sensiblement orthogonale à l'axe longitudinal AL. La direction transversale AT peut être coaxiale ou sensiblement coaxiale à la force centrifuge FC décrite par la suite. Un joint dynamique peut être agencé entre le piston d'expansion 45 et le carter 31.

Dès lors, la deuxième chambre hydraulique 40 a un volume qui varie en fonction de la position du piston d'expansion 45 dans la cavité 39, la variation de ce volume entraînant un déplacement du piston d'expansion. Un ressort de rappel 55 et/ou de l'air comprimé 701 peuvent être agencés dans la chambre de rappel 42 afin d'exercer un effort sur le piston d'expansion 45 pour pousser ce piston d'expansion 45 vers le fond 38 selon un sens transversal 56 allant du piston d'expansion 45 vers le fond 38. Le terme « ressort de rappel 55 » peut désigner un ressort en tant que tel ou plus généralement un équipement élastique.

Un siège 50 peut être fixé au carter 31 pour délimiter axialement la chambre de rappel 42. Le ressort de rappel 55 peut le cas échéant alors être en appui sur le siège 50 et une face du piston d'expansion 45, ce ressort de rappel 55 s'étendant dans la chambre de rappel 42. Eventuellement, au moins une tige 46 est solidaire du piston 45 en translation. Cette tige 46 peut être montée coulissante au travers d'un orifice de guidage 51 du siège 50. L'amortisseur hydroélastique peut de plus comprendre un voyant de niveau de fluide. La tige 46 peut ainsi comprendre au moins une marque permettant d'identifier sa position au regard d'une position de référence.

Eventuellement, la direction transversale AT peut être configurée pour être coaxiale à une force centrifuge FC qui est exercée sur le piston d'expansion 45 en fonctionnement, ou sensiblement coaxiale à cette force centrifuge FC à savoir séparée de la force centrifuge FC par un angle aigu inférieur ou égal à 15 degrés. De même, le sens transversal 56 peut être configuré pour être confondu avec ladite force centrifuge FC, ou sensiblement coaxial à cette force centrifuge FC à savoir séparé de la force centrifuge FC par un angle aigu inférieur ou égal à 15 degrés.

Par ailleurs, l'ensemble hydraulique 30 et notamment le carter 31 peut comporter une ouverture de remplissage 75 qui est en communication fluidique avec la deuxième chambre hydraulique 40 pour introduire le fluide 41 dans l'amortisseur hydroélastique 1. Cette ouverture de remplissage 75 est obturée par un bouchon 76.

De plus, la carter 31 est traversé pour chaque ensemble élastique par au moins une connexion hydraulique débouchant sur une chambre de compression, voire au moins trois ou uniquement trois connexions 60, 65, 70 par ensemble élastique.

Ainsi, au moins une connexion hydraulique dite liaison 60, 65, 70 traverse une première paroi 32 du carter 31 pour mettre en communication fluidique la première chambre hydraulique 35 et la deuxième chambre hydraulique 40.

Par exemple, la deuxième chambre hydraulique 40 est reliée hydrauliquement par au moins trois liaisons 60, 65, 70 hydrauliques voire uniquement trois liaisons 60, 65, 70 hydrauliques à la première chambre hydraulique 35.

Chaque liaison 60, 65, 70 comporte au moins un tuyau ou équivalent formant un passage dans lequel circule le fluide.

Ainsi, une première liaison 60 comprend uniquement un conduit 61 dans lequel le fluide est laminé lors de son passage au travers de ce conduit. Le conduit 61 peut comprendre un ou plusieurs passages en communication fluidique. Le conduit peut présenter une section constante ou peut comprendre une restriction ayant une section d'une surface inférieure aux autres sections de ce conduit. Le conduit peut déboucher sur un espace en liaison fluidique avec l'ouverture de remplissage 75. Le conduit peut déboucher directement sur la deuxième chambre hydraulique.

Une deuxième liaison 65 comporte au moins un premier passage 66 et un clapet de surpression 67. Ce clapet de surpression 67 est configuré pour autoriser la circulation du fluide dans la deuxième liaison uniquement de la première chambre hydraulique 35 vers la deuxième chambre hydraulique 40 et uniquement lorsqu'une pression du fluide dans la première chambre hydraulique 35 dépasse un seuil.

A titre d'exemple, le clapet de surpression peut comprendre un doigt 671 solidaire d'un ressort 672, ce ressort 672 tendant à pousser le doigt 671 contre le premier passage 66 pour l'obturer. Le ressort 672 peut de plus s'étendre entre le doigt 671 et un écrou 673 qui est mobile en translation et percé en son centre. Cet écrou 673 peut être vissé ou dévissé pour régler la « pré-charge » du ressort 672. A cet effet, l'écrou 673 peut être dans l'axe de l'ouverture de remplissage 75. Le réglage de la « pré-charge » du ressort 672 permet de régler le seuil de pression dans la chambre de compression à partir duquel le doigt 671 s'écarte du premier passage 66 pour permettre la circulation de fluide. Un deuxième écrou peut permettre de régler la course d'ouverture du clapet de surpression pour régler la courbe suivie par le début de la troisième pente décrite par la suite. D'autres types de clapet de surpression peuvent être utilisés.

Une troisième liaison 70 comporte au moins un deuxième passage 71 et un clapet antiretour 73. Le clapet antiretour 73 est configuré pour autoriser la circulation du fluide dans la troisième liaison uniquement de la deuxième chambre hydraulique 40 vers la première chambre hydraulique 35 et uniquement lorsqu'une pression du fluide dans la première chambre hydraulique 35 est inférieure à une pression du fluide dans la deuxième chambre hydraulique 40. A titre d'exemple, le clapet antiretour peut comprendre une bille 72 mobile et apte à obturer ou à ne pas obturer le deuxième passage 71.

Indépendamment de la nature des liaisons, la deuxième chambre hydraulique 40 est donc en liaison fluidique avec la première chambre hydraulique 35. La deuxième chambre hydraulique est ménagée dans le carter 31 alors que la première chambre hydraulique est délimitée par le carter 31 et le premier ensemble hydraulique.

En effet, la première chambre hydraulique 35 est délimitée radialement au moins par une armature du premier ensemble élastique 10, et en particulier par la première armature externe 15 et le carter 31 selon la figure 1 ou la première armature interne 11 et le carter 31 selon la figure 3.

De plus et en référence à la figure 1, la première chambre hydraulique 35 est délimitée axialement par la première paroi 32, selon un premier sens allant du premier ensemble élastique vers le carter 31.

Selon un deuxième sens contraire au premier sens, la première chambre hydraulique est dirigée vers le premier organe élastique. Pour éviter que le fluide 41 soit en contact avec un organe élastique, l'amortisseur hydraulique comporte alors un piston flottant par ensemble élastique.

Par suite, un premier piston flottant 80 isole hydrauliquement le premier organe élastique de la première chambre hydraulique 35.

Ainsi, le premier piston flottant délimite axialement la première chambre hydraulique 35 contenant un fluide hydraulique 41 et une chambre intermédiaire CINT remplie de gaz, par exemple soumis à la pression atmosphérique. Le matériau en élastomère du premier organe élastique est alors en contact avec ce gaz, et non pas avec le fluide 41.

Eventuellement, la première armature externe comporte une excroissance 87 translucide visible de l'extérieur de l'amortisseur hydroélastique. Par exemple, un capuchon transparent est fixé au deuxième cylindre externe et déborde radialement de ce deuxième cylindre externe vers l'extérieur. Si le piston flottant fuit, le fluide pénètre dans cette excroissance 87. Un opérateur peut alors détecter facilement la fuite sans avoir à démonter l'amortisseur hydraulique 1.

Le premier piston flottant 80 n'est fixé ni au premier ensemble élastique 10 ni à l'ensemble hydraulique 30. Ce premier piston flottant 80 est en effet, mobile au moins en translation le long de l'axe longitudinal AL voire en rotation autour de l'axe longitudinal AL par rapport à la première armature interne 11 et à la première armature externe 15. Dès lors, le volume de la première chambre hydraulique 35 varie en fonction de la position du premier piston flottant 80 par rapport à la première paroi 32, cette position étant variable.

Ce premier piston flottant 80 peut avoir une section en forme de C en présentant une face avant 81 dirigée vers la première paroi 32 et un cylindre 82 qui coulisse le long d'une armature et par exemple le long de la première armature externe 15 selon l'exemple de la figure 1 ou la première armature interne 11 selon l'exemple de la figure 3.

En référence à la figure 1, un premier joint 85 et/ou au moins deux premières bagues de guidage 86 sont agencés chacun entre le premier piston flottant 80 et la première armature externe 15. Selon la figure 1 le premier joint 85 et deux premières bagues de guidage 86 sont agencés respectivement dans des gorges du cylindre 82 du premier piston flottant 80. Selon la figure 2, le premier joint 85 et deux premières bagues de guidage 86 sont agencés respectivement dans des gorges de la première armature externe 15.

Selon la figure 3, un premier joint 85 et/ou au moins deux premières bagues de guidage 86 sont agencés chacun entre le premier piston flottant 80 et la première armature interne.

Selon la figure 1 et dans certaines positions, la première armature interne 11 exerce uniquement un appui ponctuel sur un premier point 83 du premier piston flottant 80. Ce premier point 83 peut être situé sur un axe de symétrie de révolution AROT du premier piston flottant 80, cet axe de symétrie de révolution AROT étant confondu avec l'axe longitudinal AL selon la figure 1.

Selon la figure 3, la première armature externe 11 exerce uniquement un appui ponctuel sur un premier point 83 du premier piston flottant 80

Dans ce contexte et en référence à la figure 1, chaque chambre de compression présente un volume qui varie en fonction de la position relative de la première armature interne 11 et de la première armature externe 15 de l'ensemble élastique correspondant. En particulier, le volume de la première chambre hydraulique 35 diminue lorsque l'amortisseur hydroélastique est comprimé et augmente lorsque l'amortisseur hydroélastique est en extension.

Selon un autre aspect et en référence à la première réalisation de la figure 1, l'amortisseur hydroélastique 1 comprend un unique ensemble élastique 10. Dès lors, l'ensemble hydraulique 30 peut être solidaire d'une tête de liaison 25 dite deuxième tête de liaison 27. Cette deuxième tête de liaison 27 est solidaire au moins en translation selon l'axe longitudinal AL de l'ensemble hydraulique 30, cet ensemble hydraulique 30 étant solidaire de l'armature externe au moins en translation selon l'axe longitudinal AL, ou de l'armature interne selon l'alternative choisie. Cette deuxième tête de liaison 27 peut être intégrée à l'ensemble hydraulique 30 ou peut lui être fixée par des moyens usuels. Par exemple, la deuxième tête de liaison 27 comporte une tête rotulée 271 solidaire d'un pied 272, la tête rotulée 271 pouvant être munie d'une articulation à rotule centrée sur l'axe longitudinal AL et/ou le pied pouvant être vissé à l'ensemble hydraulique 30.

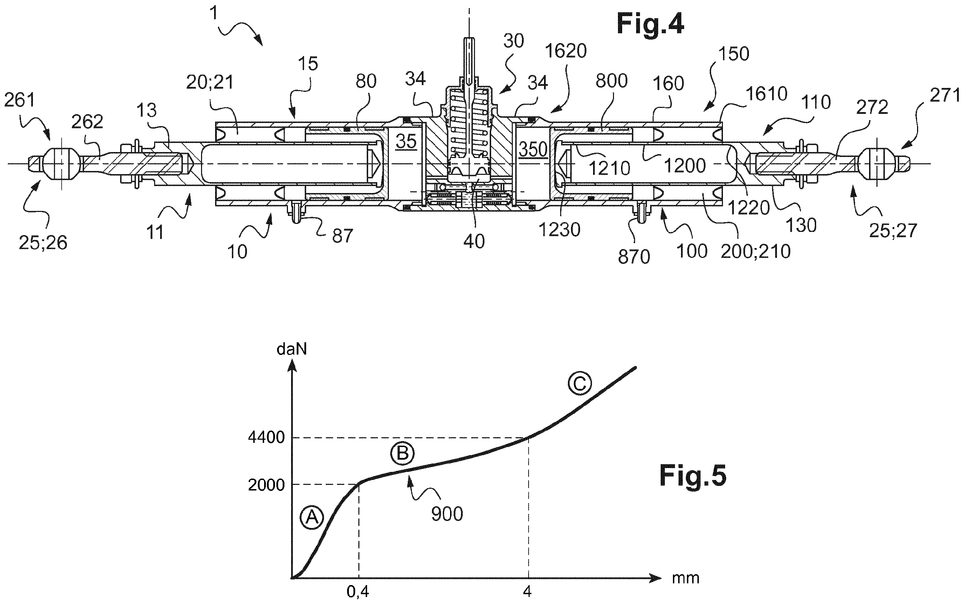

Selon la deuxième réalisation de la figure 4, l'amortisseur hydroélastique 1 comprend le premier ensemble élastique 10, l'ensemble hydraulique 30 mais aussi un deuxième ensemble élastique 100. Les deux ensembles élastiques 10, 100 sont positionnés de part et d'autre de la deuxième chambre hydraulique.

Dès lors, le deuxième ensemble élastique 100 peut comprendre les mêmes organes que le premier ensemble élastique 10.

Ainsi, le deuxième ensemble élastique 100 comprend une deuxième armature interne 110. Cette deuxième armature interne 110 peut comprendre une unique pièce monobloc d'un seul tenant ou encore plusieurs pièces fixées les unes aux autres. La deuxième armature interne 110 peut comprendre un deuxième cylindre interne 1200 qui est creux. Ce deuxième cylindre interne 1200 peut avoir une base circulaire par exemple, ou d'autres formes telles que par exemple une forme polygonale. Le deuxième cylindre interne 1200 peut s'étendre longitudinalement le long d'un axe longitudinal AL d'une extrémité dite « deuxième extrémité interne 1210 » jusqu'à une extrémité dite «deuxième extrémité externe 1220 ». L'axe longitudinal AL peut être un axe de symétrie du deuxième cylindre interne 1200.

Le deuxième ensemble élastique comprend en outre une deuxième armature externe 150. Cette deuxième armature externe 150 peut comprendre une unique pièce monobloc d'un seul tenant ou encore plusieurs pièces fixées les unes aux autres. La deuxième armature externe 150 entoure au moins partiellement la deuxième armature interne 110, et par exemple au moins une partie du deuxième cylindre interne 1200.

Ainsi, la deuxième armature externe 150 peut comprendre un deuxième cylindre externe 160 qui est creux. Le deuxième cylindre externe 160 peut entourer au moins partiellement le deuxième cylindre interne 1200. Le deuxième cylindre externe 160 et le deuxième cylindre interne 1200 peuvent être coaxiaux. Ce deuxième cylindre externe 160 peut avoir une base circulaire par exemple, ou d'autres formes de base. Le deuxième cylindre externe 160 peut s'étendre longitudinalement le long de l'axe longitudinal AL d'une portion d'extrémité dite « deuxième zone extrémale externe 1610 » jusqu'à une portion d'extrémité dite « deuxième zone extrémale interne 1620 ».

Par ailleurs, le deuxième ensemble élastique 100 comprend un deuxième organe élastique 200 reliant la deuxième armature externe 150 à la deuxième armature interne 110 en autorisant au moins un degré de liberté en translation selon l'axe longitudinal AL à la deuxième armature externe 150 par rapport à la deuxième armature interne 110. Le deuxième organe élastique 200 assure un rappel élastique de la deuxième armature externe 150 et de la deuxième armature interne 110 vers la position de repos de la figure 4. Le deuxième organe élastique 200 s'étend radialement, à savoir perpendiculairement à l'axe longitudinal AL entre au moins une face du deuxième cylindre interne 1200 et une face du deuxième cylindre externe 160 en regard l'une de l'autre.

Le deuxième organe élastique 200 peut comporter au moins un bloc 210 un matériau en élastomère, et notamment un bloc d'élastomère fixé ou solidarisé en translation au premier cylindre interne et au premier cylindre externe. Le deuxième organe élastique 200 peut comprendre des sous-ensembles élastiques d'un autre type, par exemple des ressorts ou équivalents.

Selon l'alternative de la figure 4, la deuxième armature interne 110 peut comprendre une deuxième extrémité de fixation 130 qui prolonge selon l'axe longitudinal AL le deuxième cylindre interne 1200, en étant accolée à la deuxième extrémité externe 1220. Cette deuxième extrémité de fixation 130 ferme le deuxième cylindre interne au niveau de sa deuxième extrémité externe 1220 alors que la deuxième extrémité interne 1210 est au contraire ouverte sur l'extérieur et éventuellement obturée par un bouchon 1230. La deuxième extrémité de fixation 130 peut être fixée au deuxième cylindre interne 1200 par des moyens usuels de vissage, soudage, rivetage...ou la deuxième extrémité de fixation 130 et le deuxième cylindre interne 1200 peuvent représenter deux tronçons d'une même pièce unitaire.

Par ailleurs, une tête de liaison 25 dite « deuxième tête de liaison 27 » peut être rendue solidaire de la deuxième extrémité de fixation 130. Cette deuxième tête de liaison 27 est solidaire au moins en translation selon l'axe longitudinal AL de la deuxième armature interne 110. Cette deuxième tête de liaison 27 peut être intégrée à la deuxième armature interne 110 ou peut lui être fixée par des moyens usuels. Par exemple, la deuxième tête de liaison 27 comporte une tête rotulée 271 solidaire d'un pied 272, la tête rotulée 271 pouvant être munie d'une articulation à rotule centrée sur l'axe longitudinal AL et/ou le pied 272 pouvant être vissé à la deuxième extrémité de fixation 130.

En outre, la deuxième zone extrémale externe 1610 peut être ouverte. Selon l'exemple de la figure 4, la deuxième zone extrémale externe 1610 entoure la deuxième armature interne alors que la deuxième zone extrémale externe 1610 dépasse longitudinalement de la deuxième extrémité interne 1620 de la deuxième armature interne 110.

Selon une alternative, la deuxième extrémité de fixation 130 est rendue solidaire non pas de la deuxième armature interne 110 mais de la deuxième armature externe 15.

Selon la variante de la figure 4, le carter 31 est fixé à la deuxième zone extrémale interne 1620 de la deuxième armature externe 150, éventuellement par des moyens usuels et un joint statique. Le carter 31 est alors solidaire en translation le long de l'axe longitudinal AL de la deuxième armature externe 150. Selon une autre variante, le carter 31 est fixé à la deuxième extrémité interne de la deuxième armature interne 110, éventuellement par des moyens usuels et un joint statique.

De plus, la carter 31 est traversé par au moins une connexion hydraulique dite voie débouchant sur une troisième chambre hydraulique 350.

Ainsi, au moins une voie peut traverser une deuxième paroi 33 du carter 31 pour mettre en communication fluidique la troisième chambre hydraulique 350 et la deuxième chambre hydraulique 40.

Par exemple, la deuxième chambre hydraulique 40 est reliée par au moins trois voies hydrauliques à la troisième chambre hydraulique 350.

Ces trois voies peuvent être du type des trois liaisons 60, 65, 70 précédemment décrites.

Indépendamment de la nature des voies, la deuxième chambre hydraulique 40 est donc en liaison fluidique avec la troisième chambre hydraulique 350. La deuxième chambre hydraulique est ménagée dans le carter 31 alors que la troisième chambre hydraulique est délimitée par le carter 31 et le deuxième ensemble hydraulique.

Alternativement ou de manière complémentaire, une liaison hydraulique non visible sur les figures relie hydrauliquement la première chambre hydraulique 35 et la troisième chambre hydraulique 350.

Par exemple, l'amortisseur peut être dépourvu des au moins trois voies, la troisième chambre hydraulique 350 communiquant hydrauliquement qu'avec la première chambre hydraulique 35 via ladite liaison hydraulique. Une telle variante tend à être allégée.

En effet, la troisième chambre hydraulique 350 est délimitée radialement au moins par une armature du deuxième ensemble élastique 100, et en particulier par la deuxième armature externe 150 selon l'exemple représenté, voire par le carter 31.

De plus, la troisième chambre hydraulique 350 est délimitée axialement selon le deuxième sens précité par la deuxième paroi 33.

Selon le premier sens précité, la troisième première chambre hydraulique est dirigée vers le deuxième organe élastique. Pour éviter que le fluide 41 soit en contact avec ce deuxième organe élastique, l'amortisseur hydraulique comporte alors un deuxième piston flottant du type du premier piston flottant.

Par suite, un deuxième piston flottant 800 isole hydrauliquement le deuxième organe élastique de la troisième chambre hydraulique 350.

Ainsi, le deuxième piston flottant délimite axialement la troisième chambre hydraulique 350 contenant un fluide hydraulique et une chambre intermédiaire remplie de gaz, par exemple soumis à la pression atmosphérique. Le matériau en élastomère du deuxième organe élastique est alors en contact avec ce gaz, et non pas avec le fluide 41. Eventuellement, la deuxième armature externe comporte une excroissance 870 translucide visible de l'extérieur de l'amortisseur hydroélastique.

Le deuxième piston flottant 800 n'est fixé ni au deuxième ensemble élastique 100 ni à l'ensemble hydraulique 30 voire même au premier ensemble élastique 10. Ce deuxième piston flottant 800 est en effet, mobile au moins en translation le long de l'axe longitudinal AL, voire en rotation autour de l'axe longitudinal AL, par rapport à la deuxième armature interne 110 et à la deuxième armature externe 150. Dès lors, le volume de la troisième chambre hydraulique 350 varie en fonction de la position du deuxième piston flottant 800 par rapport à la deuxième paroi 33, cette position étant variable.

Ce deuxième piston flottant 800 peut avoir une section en forme de C en présentant une face avant dirigée vers la deuxième paroi 33 et un cylindre qui coulisse le long d'une armature et par exemple le long de la deuxième armature externe 150.

Un deuxième joint 850 et/ou au moins deux premières bagues de guidage 860 sont agencées chacune entre le deuxième piston flottant 800 et la deuxième armature le long de laquelle coulisse le deuxième piston flottant, à savoir la deuxième armature externe 150 selon la figure 4, par exemple dans des gorges du deuxième piston flottant 800 ou de la deuxième armature concernée.

Dans certaines positions, la deuxième armature interne 110 exerce uniquement un appui ponctuel sur un deuxième point 830 du deuxième piston flottant 800. Ce deuxième point 830 peut être situé sur un axe de symétrie de révolution AROT du deuxième piston flottant 800, cet axe de symétrie de révolution AROT étant confondu avec l'axe longitudinal AL selon la figure 4. Selon une autre variante, la deuxième armature externe 150 exerce uniquement un appui ponctuel sur le deuxième point 830 du deuxième piston flottant 800

La figure 5 présente un diagramme illustrant un effort de compression qui varie en fonction du déplacement relatif de chaque armature interne par rapport à l'armature externe associée d'un amortisseur hydroélastique selon l'invention. Ce diagramme présente ledit déplacement en millimètres (mm) en abscisses et ledit effort en décaNewtons (daN) en ordonnées. Cet effort suit une loi 900 à trois pentes A, B, C. Les chiffres fournis sont donnés à titre illustratif.

Les figures 1, 6 et 7 explicitent le fonctionnement de l'amortisseur hydroélastique 1. Ce fonctionnement est décrit en partant de la réalisation de la figure 1 par commodité. Toutefois, les diverses variantes de l'invention fonctionnent de manière similaire.

La figure 1 présente l'amortisseur hydroélastique 1 au repos.

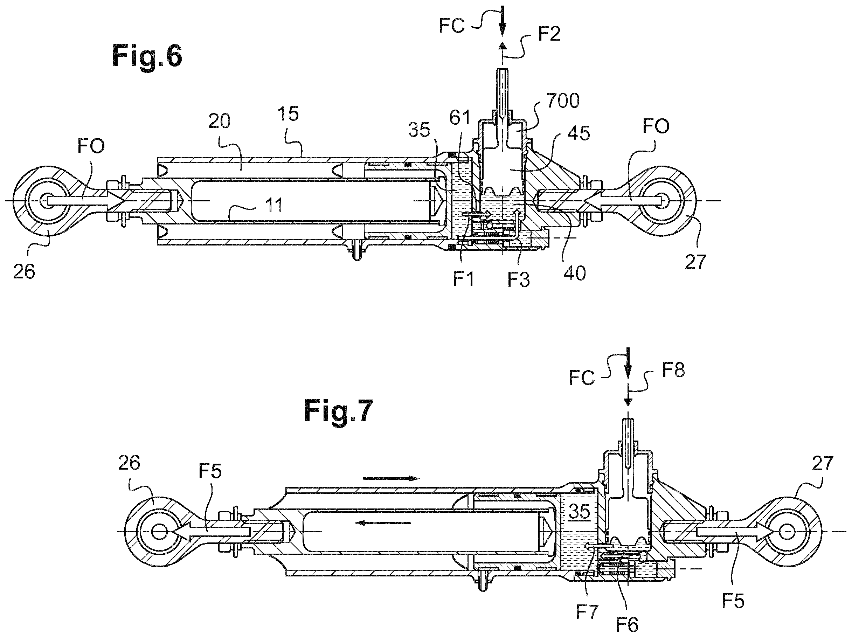

En référence à la figure 6, lorsque l'amortisseur hydroélastique 1 est comprimé alors la première tête de liaison 26 et la deuxième tête de liaison 27 se déplacent longitudinalement l'une vers l'autre selon les flèches F0. Ce rapprochement est autorisé par un déplacement de la première armature interne 11 par rapport à la première armature externe 15 en déformant le premier organe élastique 20 correspondant.

La première armature interne 11 pousse le premier piston flottant 80 via un appui ponctuel. Dès lors, le volume de la première chambre hydraulique 35 est réduit, le fluide 41 s'échappant de la première chambre hydraulique 35 en traversant la restriction du conduit 61 de la première liaison selon la flèche F1. Le volume de la deuxième chambre hydraulique 40 augmente, le piston d'expansion 45 s'éloignant du fond du carter selon la flèche F2 en luttant contre la force centrifuge et le cas échéant comprimant un ressort de rappel ou l'air 700. L'amortisseur hydroélastique 1 se comporte alors en suivant la première pente A de la loi 900.

Si la compression se poursuit la pression régnant dans la première chambre hydraulique 35 augmente. Dès que cette pression dépasse le seuil d'ouverture du clapet de surpression, ce clapet de surpression s'ouvre progressivement. Le fluide 41 s'échappe de la première chambre hydraulique 35 via le conduit selon la flèche F1 et via la deuxième liaison selon la flèche F3. Le débit du fluide au travers du clapet de surpression augmente progressivement au fur et à mesure de son ouverture. L'amortisseur hydroélastique se comporte ainsi en suivant la deuxième pente B de la loi 900.

Si la compression se poursuit, le clapet de surpression s'ouvre totalement. Le terme « totalement » signifie que le clapet de surpression est en butée et ne peut donc pas s'ouvrir plus. L'amortisseur hydroélastique se comporte en suivant la troisième pente C de la loi 900 triple pente décrite précédemment.

En référence à la figure 7, lorsque l'amortisseur hydroélastique est étiré, la première tête de liaison 26 et la deuxième tête de liaison 27 s'écartent longitudinalement l'une de l'autre selon les flèches F5. La pression du fluide 41 dans la première chambre hydraulique 35 chute brutalement et le clapet de surpression se ferme. A l'inverse, le clapet antiretour de la troisième liaison s'ouvre. La chambre hydraulique 40 se vide via la première liaison selon la flèche F7 et la troisième liaison selon la flèche F6. Le piston d'expansion 45 se déplace selon la flèche F8 en se rapprochant du fond du carter pour participer à l'évacuation du fluide en dehors de la chambre d'expansion. La force centrifuge FC et le cas échéant le ressort de rappel favorisent ce déplacement en raison de l'orientation de l'axe de déplacement du piston.

A l'inverse, la première chambre hydraulique 35 se remplit ce qui éloigne le premier piston flottant 80 de la deuxième chambre hydraulique. Avec ce premier piston flottant les risques de cavitation sont au moins réduits. En effet, le premier piston flottant est déconnecté de la première armature intérieure. Seule la pression régnant dans la première chambre hydraulique 35 tend à déplacer le premier piston flottant pour le plaquer contre la première armature interne. Ainsi en cas de mouvement brutal, si la pression régnant dans la première chambre hydraulique 35 n'était pas suffisante, à savoir si la pression régnant dans la première chambre hydraulique 35 est inférieure à la pression régnant dans la chambre intermédiaire CINT, le premier piston flottant ne suivrait pas la première armature interne en lui étant accolée, et ne créerait pas un vide source de cavitation dans la première chambre hydraulique 35.

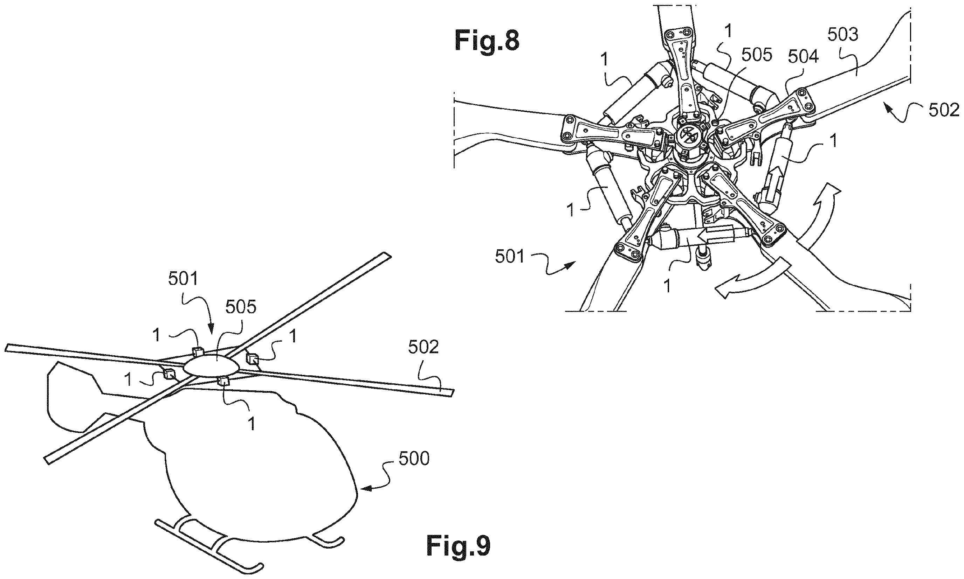

En référence à la figure 8, un tel amortisseur hydroélastique 1 peut favorablement être fixé à deux ensembles sustentateurs adjacents d'un rotor 501.

Un rotor 501 selon l'invention peut ainsi comprendre un moyeu 505 qui porte une pluralité d'ensembles sustentateurs 502. Chaque ensemble sustentateur 502 peut par exemple comprendre une pale 503 liée directement au moyeu, par exemple via une butée sphérique, ou encore une pale 503 reliée à un organe de liaison 504 lui-même relié au moyeu. Par exemple, un ensemble sustentateur 502 peut comprendre une pale avec manchon intégré ou une pale fixée à un manchon. Dès lors, chaque ensemble sustentateur peut être relié à deux ensembles sustentateurs respectivement par deux amortisseurs hydroélastiques 1.

Chaque amortisseur hydroélastique 1 est alors articulé par sa première tête de liaison à un ensemble sustentateur, par exemple son manchon ou sa pale, et par sa deuxième tête de liaison à un autre ensemble sustentateur, par exemple un manchon ou la pale de cet autre ensemble sustentateur.

La figure 9 présente un aéronef 500 selon l'invention.

En particulier, l'aéronef 500 peut comporter une cellule portant un rotor 501 du type de la figure 8.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Les figures 1 à 7 décrivent un amortisseur particulier mais d'autres types d'amortisseurs peuvent être munis d'un piston flottant selon l'invention, par exemple un amortisseur du type du document FR 2736890.

## Revendications

1. Amortisseur hydroélastique (1) comprenant au moins un ensemble élastique, ledit au moins un ensemble élastique incluant un premier ensemble élastique (10), ledit premier ensemble élastique (10) comprenant une première armature interne (11) au moins partiellement engagée dans une première armature externe (15), la première armature interne (11) et la première armature externe (15) étant mobiles l'une par rapport à l'autre au moins en translation selon un axe longitudinal (AL), ledit premier ensemble élastique (10) comprenant un premier organe élastique (20) solidarisé à la première armature externe (15) et à la première armature interne (11) en assurant un rappel élastique de la première armature externe (15) et de la première armature interne (11) vers une position de repos (POSREP), ledit amortisseur hydroélastique (1) comprenant au moins un ensemble hydraulique (30) muni d'une première chambre hydraulique (35) et d'une deuxième chambre hydraulique (40) en communication l'une avec l'autre via au moins une liaison (60, 65, 70) ménagée dans une première paroi (32) de l'ensemble hydraulique (30), un fluide (41) étant disposé dans ladite première chambre hydraulique (35) et ladite deuxième chambre hydraulique (40),
ledit amortisseur hydroélastique (1) comportant un premier piston flottant (80) mobile au moins en translation le long de l'axe longitudinal (AL) par rapport à la première armature interne (11) et à la première armature externe (15), ladite première chambre hydraulique (35) ayant un volume variable et étant délimitée au moins par ledit premier piston flottant (80) et ladite première paroi (32), **caractérisé en ce que** ledit premier piston flottant (80) isole hydrauliquement ledit premier organe élastique (20) du fluide (41).

2. Amortisseur hydroélastique selon la revendication 1,
**caractérisé en ce que** le premier piston flottant (80) coulisse le long de la première armature externe (15) ou de la première armature interne (11), un premier joint (85) étant agencé entre ledit premier piston flottant (80) et ladite première armature externe (15) ou première armature interne le long de laquelle coulisse le premier piston flottant.

3. Amortisseur hydroélastique selon l'une quelconque des revendications 1 à 2,
**caractérisé en ce que** le premier piston flottant (80) coulisse le long de la première armature externe (15) ou de la première armature interne (11), au moins deux premières bagues de guidage (86) étant agencées chacune entre le premier piston flottant (80) et la première armature externe (15) ou la première armature interne le long de laquelle coulisse le premier piston flottant.

4. Amortisseur hydroélastique selon l'une quelconque des revendications 1 à 3,
**caractérisé en ce que** ledit premier piston flottant (80) n'est fixé ni au premier ensemble élastique (10) ni à l'ensemble hydraulique (30).

5. Amortisseur hydroélastique selon l'une quelconque des revendications 1 à 4,
**caractérisé en ce que** ladite première chambre hydraulique (35) est délimitée partiellement par la première armature externe (15) ou la première armature interne (11).

6. Amortisseur hydroélastique selon l'une quelconque des revendications 1 à 5,
**caractérisé en ce que** ladite première paroi (32) est solidaire en translation le long de l'axe longitudinal (AL) de la première armature externe (15).

7. Amortisseur hydroélastique selon l'une quelconque des revendications 1 à 6,
**caractérisé en ce que** ladite première armature interne (11) ou la première armature externe (15) exerce uniquement un appui ponctuel sur un premier point (83) du premier piston flottant (80) lorsque le premier piston flottant (80) est en contact avec cette première armature interne (11) ou première armature externe (15).

8. Amortisseur hydroélastique selon la revendication 7,
**caractérisé en ce que** ledit premier point (83) du premier piston flottant (80) est situé sur un axe de symétrie de révolution (AROT) dudit premier piston flottant (80).

9. Amortisseur hydroélastique selon l'une quelconque des revendications 1 à 8,
**caractérisé en ce que** ledit ensemble hydraulique (30) comporte un carter (31) qui inclut ladite première paroi (32), ladite deuxième chambre hydraulique (40) étant délimitée par ledit carter (31) et un piston d'expansion (45) mobile en translation par rapport au carter (31).

10. Amortisseur hydroélastique selon l'une quelconque des revendications 1 à 9,
**caractérisé en ce que** ledit ensemble hydraulique (30) est solidaire d'une tête de liaison à rotule (27) alignée avec une tête de liaison à rotule (26) dudit premier ensemble élastique (10).

11. Amortisseur hydroélastique selon l'une quelconque des revendications 1 à 9,
**caractérisé en ce que** ledit au moins un ensemble élastique comprend un deuxième ensemble élastique (100), ledit deuxième ensemble élastique (100) comprenant une deuxième armature interne (110) et une deuxième armature externe (150) mobiles l'une par rapport à l'autre au moins en translation selon l'axe longitudinal (AL), ledit deuxième ensemble élastique (100) comprenant un deuxième organe élastique (200) solidarisé à la deuxième armature externe (150) et à la deuxième armature interne (110) en assurant un rappel élastique de la deuxième armature externe (150) et de la deuxième armature interne (110) vers une position initiale, ledit amortisseur hydroélastique (1) comprenant une troisième chambre hydraulique (350), ledit amortisseur hydroélastique comportant un deuxième piston flottant (800) mobile au moins en translation le long de l'axe longitudinal (AL) par rapport à la deuxième armature interne (110) et à la deuxième armature externe (150), ladite troisième chambre hydraulique (350) ayant un volume variable et étant délimitée au moins par ledit deuxième piston flottant (800) et une deuxième paroi (32) de l'ensemble hydraulique, ledit deuxième piston flottant (800) isolant hydrauliquement ledit deuxième organe élastique (200) du fluide (41).

12. Amortisseur hydroélastique selon la revendication 11,
**caractérisé en ce que** le deuxième piston flottant (800) coulisse le long de la deuxième armature externe (150) ou de la deuxième armature interne, un deuxième joint (850) étant agencé entre ledit deuxième piston flottant (800) et ladite deuxième armature externe (150) ou la deuxième armature interne (110) le long de laquelle coulisse le deuxième piston flottant.

13. Amortisseur hydroélastique selon l'une quelconque des revendications 11 à 12,
**caractérisé en ce que** le deuxième piston flottant (800) coulisse le long de la deuxième armature externe (150) ou de la deuxième armature interne, au moins deux deuxièmes bagues de guidage (860) étant agencées chacune entre le deuxième piston flottant (800) et la deuxième armature externe (150) ou la deuxième armature interne (110) le long de laquelle coulisse le deuxième piston flottant.

14. Amortisseur hydroélastique selon l'une quelconque des revendications 11 à 13,
**caractérisé en ce que** ledit deuxième piston flottant (800) n'est fixé ni au deuxième ensemble élastique (100) ni à l'ensemble hydraulique (30).

15. Amortisseur hydroélastique selon l'une quelconque des revendications 11 à 14,
**caractérisé en ce que** ladite troisième chambre hydraulique (350) est délimitée partiellement par la deuxième armature externe (150) ou la deuxième armature interne.

16. Amortisseur hydroélastique selon l'une quelconque des revendications 11 à 15,
**caractérisé en ce que** ladite deuxième paroi (32) est solidaire en translation de la deuxième armature externe (150) ou de la deuxième armature interne.

17. Amortisseur hydroélastique selon l'une quelconque des revendications 11 à 16,
**caractérisé en ce que** lesdits premier et deuxième ensembles élastiques (10, 100) sont positionnés de part et d'autre de la deuxième chambre hydraulique (40), deux têtes de liaison à rotule (26, 27) respectivement des premier et deuxième ensembles élastiques (10, 100) étant alignées.

18. Amortisseur hydroélastique selon l'une quelconque des revendications 11 à 17,
**caractérisé en ce que** ladite deuxième armature interne (110) ou la deuxième armature externe exerce uniquement un appui ponctuel sur un deuxième point (830) du deuxième piston flottant (800) lorsque le deuxième piston flottant (800) est en contact avec la deuxième armature interne (110) ou la deuxième armature externe.

19. Amortisseur hydroélastique selon la revendication 18,
**caractérisé en ce que** ledit deuxième point (830) du deuxième piston flottant (800) est situé sur un axe de symétrie de révolution (AROT) dudit deuxième piston flottant (800).

20. Aéronef (500) muni d'un rotor (501) participant au moins à la sustentation de cet aéronef (500), ledit rotor (501) comprenant un moyeu (505) portant une pluralité d'ensembles sustentateurs (502),
**caractérisé en ce que** ledit rotor (501) comporte au moins un amortisseur hydroélastique (1) selon l'une quelconque des revendications 1 à 19 fixé à au moins un ensemble sustentateur (502) .

## Patentansprüche

1. Hydroelastischer Dämpfer (1) mit mindestens einer elastischen Einheit, wobei die mindestens eine elastische Einheit eine erste elastische Einheit (10) umfasst, wobei die erste elastische Einheit (10) einen ersten inneren Rahmen (11) aufweist, der mindestens teilweise in einen ersten äußeren Rahmen (15) eingreift, wobei der erste innere Rahmen (11) und der erste äußere Rahmen (15) relativ zueinander mindestens in Translation entlang einer Längsachse (AL) beweglich sind, wobei die erste elastische Baugruppe (10) ein erstes elastisches Element (20) umfasst, das mit dem ersten äußeren Rahmen (15) und an dem ersten inneren Rahmen (11) fest verbunden ist und eine elastische Rückstellung des ersten äußeren Rahmens (15) und des ersten inneren Rahmens (11) in eine Ruheposition (POSREP) gewährleistet, wobei der hydroelastische Dämpfer (1) mindestens eine Hydraulikeinheit (30) umfasst, die eine erste Hydraulikkammer (35) und eine zweite Hydraulikkammer (40) aufweist, die miteinander über mindestens eine Verbindung (60, 65, 70) kommunizieren, die in einer ersten Wand (32) der Hydraulikeinheit (30) vorgesehen ist, wobei ein Fluid (41) in der ersten Hydraulikkammer (35) und der zweiten Hydraulikkammer (40) angeordnet ist,
wobei der hydroelastische Dämpfer (1) einen ersten schwimmenden Kolben (80) umfasst, der zumindest translatorisch entlang der Längsachse (AL) in Bezug auf den ersten inneren Rahmen (11) und den ersten äußeren Rahmen (15) beweglich ist, wobei die erste Hydraulikkammer (35) ein variables Volumen aufweist und zumindest durch den ersten schwimmenden Kolben (80) und die erste Wand (32) begrenzt ist,
**dadurch gekennzeichnet, dass** der erste schwimmende Kolben (80) das erste elastische Element (20) von dem Fluid (41) hydraulisch isoliert.

2. Hydroelastischer Dämpfer nach Anspruch 1,
**dadurch gekennzeichnet, dass** der erste schwimmende Kolben (80) entlang des ersten äußeren Rahmens (15) oder des ersten inneren Rahmens (11) gleitet, und dass eine erste Dichtung (85) zwischen dem ersten schwimmenden Kolben (80) und dem ersten äußeren Rahmen (15) oder dem ersten inneren Rahmen, entlang dem der erste schwimmende Kolben gleitet, angeordnet ist.

3. Hydroelastischer Dämpfer nach einem der Ansprüche 1 bis 2,
**dadurch gekennzeichnet, dass** der erste schwimmende Kolben (80) entlang des ersten äußeren Rahmens (15) oder des ersten inneren Rahmens (11) gleitet, wobei mindestens zwei erste Führungsringe (86) jeweils zwischen dem ersten schwimmenden Kolben (80) und dem ersten äußeren Rahmen (15) oder dem ersten inneren Rahmen, entlang dem der erste schwimmende Kolben gleitet, angeordnet sind.

4. Hydroelastischer Dämpfer nach einem der Ansprüche 1 bis 3,
**dadurch gekennzeichnet, dass** der erste schwimmende Kolben (80) weder an der ersten elastischen Baugruppe (10) noch an der hydraulischen Baugruppe (30) befestigt ist.

5. Hydroelastischer Dämpfer nach einem der Ansprüche 1 bis 4,
**dadurch gekennzeichnet, dass** die erste Hydraulikkammer (35) teilweise durch den ersten äußeren Rahmen (15) oder den ersten inneren Rahmen (11) begrenzt ist.

6. Hydroelastischer Dämpfer nach einem der Ansprüche 1 bis 5,
**dadurch gekennzeichnet, dass** die erste Wand (32) mit dem ersten äußeren Rahmen (15) in Translation entlang der Längsachse (AL) fest verbunden ist.

7. Hydroelastischer Dämpfer nach einem der Ansprüche 1 bis 6,
**dadurch gekennzeichnet, dass** der erste innere Rahmen (11) oder der erste äußere Rahmen (15) nur eine punktuelle Auflagekraft auf einen ersten Punkt (83) des ersten schwimmenden Kolbens (80) ausübt, wenn der erste schwimmende Kolben (80) mit diesem ersten inneren Rahmen (11) oder ersten äußeren Rahmen (15) in Kontakt ist.

8. Hydroelastischer Dämpfer nach Anspruch 7,
**dadurch gekennzeichnet, dass** sich der erste Punkt (83) des ersten schwimmenden Kolbens (80) auf einer Rotationssymmetrieachse (AROT) des ersten schwimmenden Kolbens (80) befindet.

9. Hydroelastischer Dämpfer nach einem der Ansprüche 1 bis 8,
**dadurch gekennzeichnet, dass** die Hydraulikeinheit (30) ein Gehäuse (31) aufweist, das die erste Wand (32) umfasst, wobei die zweite Hydraulikkammer (40) durch das Gehäuse (31) und einen relativ zum Gehäuse (31) translatorisch beweglichen Expansionskolben (45) begrenzt ist.

10. Hydroelastischer Dämpfer nach einem der Ansprüche 1 bis 9,
**dadurch gekennzeichnet, dass** die Hydraulikeinheit (30) mit einem Kugelgelenk-Verbindungskopf (27) fest verbunden ist, der zu einem Kugelgelenk-Verbindungskopf (26) der ersten elastischen Einheit (10) ausgerichtet ist.

11. Hydroelastischer Dämpfer nach einem der Ansprüche 1 bis 9,
**dadurch gekennzeichnet, dass** die mindestens eine elastische Einheit eine zweite elastische Einheit (100) umfasst, wobei die zweite elastische Einheit (100) einen zweiten inneren Rahmen (110) und einen zweiten äußeren Rahmen (150) umfasst, die relativ zueinander mindestens in Translation entlang der Längsachse (AL) beweglich sind, wobei die zweite elastische Einheit (100) ein zweites elastisches Element (200) umfasst, das mit dem zweiten äußeren Rahmen (150) und mit dem zweiten inneren Rahmen (110) fest verbunden ist und eine elastische Rückstellung des zweiten äußeren Rahmens (150) und des zweiten inneren Rahmens (110) in eine Ausgangsposition gewährleistet, wobei der hydroelastische Dämpfer (1) eine dritte Hydraulikkammer (350) umfasst, wobei der hydroelastische Dämpfer einen zweiten schwimmenden Kolben (800) umfasst, der zumindest translatorisch entlang der Längsachse (AL) relativ zum zweiten inneren Rahmen (110) und zum zweiten äußeren Rahmen (150) beweglich ist, wobei die dritte Hydraulikkammer (350) ein variables Volumen aufweist und mindestens durch den zweiten schwimmenden Kolben (800) und eine zweite Wand (32) der Hydraulikeinheit begrenzt ist, wobei der zweite schwimmende Kolben (800) das zweite elastische Element (200) hydraulisch von dem Fluid (41) isoliert.

12. Hydroelastischer Dämpfer nach Anspruch 11,
**dadurch gekennzeichnet, dass** der zweite schwimmende Kolben (800) entlang des zweiten äußeren Rahmens (150) oder des zweiten inneren Rahmens gleitet, und dass eine zweite Dichtung (850) zwischen dem zweiten schwimmenden Kolben (800) und dem zweiten äußeren Rahmen (150) oder dem zweiten inneren Rahmen (110) angeordnet ist, an dem der zweite schwimmende Kolben entlanggleitet.

13. Hydroelastischer Dämpfer nach einem der Ansprüche 11 bis 12,
**dadurch gekennzeichnet, dass** der zweite schwimmende Kolben (800) entlang des zweiten äußeren Rahmens (150) oder des zweiten inneren Rahmens gleitet, und dass mindestens zwei zweite Führungsringe (860) zwischen dem zweiten schwimmenden Kolben (800) und dem zweiten äußeren Rahmen (150) oder dem zweiten inneren Rahmen (110) angeordnet sind, an dem der zweite schwimmende Kolben entlanggleitet.

14. Hydroelastischer Dämpfer nach einem der Ansprüche 11 bis 13,
**dadurch gekennzeichnet, dass** der zweite schwimmende Kolben (800) weder an der zweiten elastischen Einheit (100) noch an der hydraulischen Einheit (30) befestigt ist.

15. Hydroelastischer Dämpfer nach einem der Ansprüche 11 bis 14,
**dadurch gekennzeichnet, dass** die dritte Hydraulikkammer (350) teilweise durch den zweiten äußeren Rahmen (150) oder den zweiten inneren Rahmen begrenzt ist.

16. Hydroelastischer Dämpfer nach einem der Ansprüche 11 bis 15,
**dadurch gekennzeichnet, dass** die besagte zweite Wand (32) translatorisch fest mit dem zweiten äußeren Rahmen (150) oder dem zweiten inneren Rahmen verbunden ist.

17. Hydroelastischer Dämpfer nach einem der Ansprüche 11 bis 16,
**dadurch gekennzeichnet, dass** die erste und die zweite elastische Einheit (10, 100) beiderseits der zweiten Hydraulikkammer (40) angeordnet sind, und dass zwei Kugelgelenkköpfe (26, 27) der ersten bzw. der zweiten elastischen Einheit (10, 100) ausgerichtet sind.

18. Hydroelastischer Dämpfer nach einem der Ansprüche 11 bis 17,
**dadurch gekennzeichnet, dass** der zweite innere Rahmen (110) oder der zweite äußere Rahmen nur einen punktuellen Druck auf einen zweiten Punkt (830) des zweiten schwimmenden Kolbens (800) ausübt, wenn der zweite schwimmende Kolben (800) mit dem zweiten inneren Rahmen (110) oder dem zweiten äußeren Rahmen in Kontakt ist.

19. Hydroelastischer Dämpfer nach Anspruch 18,
**dadurch gekennzeichnet, dass** sich der zweite Punkt (830) des zweiten schwimmenden Kolbens (800) auf einer Rotationssymmetrieachse (AROT) des zweiten schwimmenden Kolbens (800) befindet.

20. Flugzeug (500) mit einem Rotor (501), der zumindest zum Auftrieb dieses Flugzeugs (500) beiträgt, wobei der Rotor (501) eine Nabe (505) aufweist, die eine Mehrzahl von Auftriebseinheiten (502) trägt,
**dadurch gekennzeichnet, dass** der Rotor (501) mindestens einen hydroelastischen Dämpfer (1) nach einem der Ansprüche 1 bis 19 aufweist, der an mindestens einer Auftriebseinheit (502) befestigt ist.

## Claims

1. Hydroelastic damper (1) comprising at least one resilient assembly, said at least one resilient assembly including a first resilient assembly (10), said first resilient assembly (10) comprising a first inner strength member (11) at least partially engaged in a first outer strength member (15), the first inner strength member (11) and the first outer strength member (15) being movable relative to each other at least in translation along a longitudinal axis (AL), said first resilient assembly (10) comprising a first resilient member (20) secured to the first outer strength member (15) and to the first inner strength member (11) so as to provide a resilient return of the first outer strength member (15) and the first inner strength member (11) towards a rest position (POSREP), said hydroelastic damper (1) comprising at least one hydraulic assembly (30) provided with a first hydraulic chamber (35) and a second hydraulic chamber (40) in communication with each other via at least one connection (60, 65, 70) formed in a first wall (32) of the hydraulic assembly (30), a fluid (41) being disposed in said first hydraulic chamber (35) and said second hydraulic chamber (40), said hydroelastic damper (1) comprising a first floating piston (80) that is movable at least in translation along the longitudinal axis (AL) relative to the first inner strength member (11) and to the first outer strength member (15), said first hydraulic chamber (35) having a variable volume and being defined at least by said first floating piston (80) and said first wall (32), **characterised in that** said first floating piston (80) hydraulically isolates said first resilient member (20) from the fluid (41).

2. Hydroelastic damper according to claim 1, **characterised in that** the first floating piston (80) slides along the first outer strength member (15) or the first inner strength member (11), a first gasket (85) being arranged between said first floating piston (80) and said first outer strength member (15) or first inner strength member along which the first floating piston slides.

3. Hydroelastic damper according to either claim 1 or claim 2, **characterised in that** the first floating piston (80) slides along the first outer strength member (15) or the first inner strength member (11), at least two first guide rings (86) each being arranged between the first floating piston (80) and the first outer strength member (15) or the first inner strength member along which the first floating piston slides.

4. Hydroelastic damper according to any of claims 1 to 3, **characterised in that** said first floating piston (80) is fastened neither to the first resilient assembly (10) nor to the hydraulic assembly (30).

5. Hydroelastic damper according to any of claims 1 to 4, **characterised in that** said first hydraulic chamber (35) is partially defined by the first outer strength member (15) or the first inner strength member (11).

6. Hydroelastic damper according to any of claims 1 to 5, **characterised in that** said first wall (32) is constrained to move in translation along the longitudinal axis (AL) with the first outer strength member (15).

7. Hydroelastic damper according to any of claims 1 to 6, **characterised in that** said first inner strength member (11) or the first outer strength member (15) exerts only point thrust on a first point (83) of the first floating piston (80) when the first floating piston (80) is in contact with the first inner strength member (11) or first outer strength member (15).

8. Hydroelastic damper according to claim 7, **characterised in that** said first point (83) of the first floating piston (80) is located on an axis of rotational symmetry (AROT) of said first floating piston (80).

9. Hydroelastic damper according to any of claims 1 to 8, **characterised in that** said hydraulic assembly (30) comprises a casing (31) which includes said first wall (32), said second hydraulic chamber (40) being defined by said casing (31) and an expansion piston (45) that is movable in translation relative to the casing (31).

10. Hydroelastic damper according to any of claims 1 to 9, **characterised in that** said hydraulic assembly (30) is secured to a ball-joint connection head (27) in alignment with a ball-joint connection head (26) of said first resilient assembly (10).

11. Hydroelastic damper according to any of claims 1 to 9, **characterised in that** said at least one resilient assembly comprises a second resilient assembly (100), said second resilient assembly (100) comprising a second inner strength member (110) and a second outer strength member (150) that are movable relative to each other at least in translation along the longitudinal axis (AL), said second resilient assembly (100) comprising a second resilient member (200) secured to the second outer strength member (150) and to the second inner strength member (110) so as to provide a resilient return of the second outer strength member (150) and of the second inner strength member (110) to an initial position, said hydroelastic damper (1) comprising a third hydraulic chamber (350), said hydroelastic damper comprising a second floating piston (800) that is movable at least in translation along the longitudinal axis (AL) relative to the second inner strength member (110) and to the second outer strength member (150), said third hydraulic chamber (350) having a variable volume and being defined at least by said second floating piston (800) and a second wall (32) of the hydraulic assembly, said second floating piston (800) hydraulically isolating said second resilient member (200) from the fluid (41).

12. Hydroelastic damper according to claim 11, **characterised in that** the second floating piston (800) slides along the second outer strength member (150) or the second inner strength member, a second gasket (850) being arranged between said second floating piston (800) and said second outer strength member (150) or the second inner strength member (110) along which the second floating piston slides.

13. Hydroelastic damper according to either claim 11 or claim 12, **characterised in that** the second floating piston (800) slides along the second outer strength member (150) or the second inner strength member, at least two second guide rings (860) each being arranged between the second floating piston (800) and the second outer strength member (150) or the second inner strength member (110) along which the second floating piston slides.

14. Hydroelastic damper according to any of claims 11 to 13, **characterised in that** said second floating piston (800) is fastened neither to the second resilient assembly (100) nor to the hydraulic assembly (30).

15. Hydroelastic damper according to any of claims 11 to 14, **characterised in that** said third hydraulic chamber (350) is partially defined by the second outer strength member (150) or the second inner strength member.

16. Hydroelastic damper according to any of claims 11 to 15, **characterised in that** said second wall (32) is constrained to move in translation with the second outer strength member (150) or with the second inner strength member.

17. Hydroelastic damper according to any of claims 11 to 16, **characterised in that** said first and second resilient assemblies (10, 100) are positioned on either side of the second hydraulic chamber (40), two ball-joint connection heads (26, 27) belonging to the first and second resilient assemblies (10, 100), respectively, being in alignment.

18. Hydroelastic damper according to any of claims 11 to 17, **characterised in that** said second inner strength member (110) or the second outer strength member exerts only point thrust on a second point (830) of the second floating piston (800) when the second floating piston (800) is in contact with the second inner strength member (110) or the second outer strength member.

19. Hydroelastic damper according to claim 18, **characterised in that** said second point (830) of the second floating piston (800) is situated on an axis of rotational symmetry (AROT) of said second floating piston (800).

20. Aircraft (500) provided with a rotor (501) contributing to providing the aircraft (500) at least with lift, said rotor (501) comprising a hub (505) carrying a plurality of lift assemblies (502), **characterised in that** said rotor (501) comprises at least one hydroelastic damper (1) according to any of claims 1 to 19 fastened to at least one lift assembly (502).
